# EUROPEAN PATENT SPECIFICATION

(11) **EP 3 901 038 B1**
(45) Date of publication and mention of the grant of the patent: **09.08.2023**
(21) Application number: 21170528.0
(22) Date of filing: 26.04.2021
(51) Int. Cl.: B64D 11/02, B65F 1/16

(54) **SYSTEM AND METHOD FOR CONTROLLING LID OF TRASH RECEPTACLE OF AIRCRAFT LAVATORY**
SYSTEM UND VERFAHREN ZUR STEUERUNG DES DECKELS EINES MÜLLBEHÄLTERS EINER FLUGZEUGTOILETTE
SYSTÈME ET PROCÉDÉ DE COMMANDE DE COUVERCLE DE POUBELLE DE TOILETTES D'UN AÉRONEF

(30) Priority: 25.04.2020 IN 202041017759; 05.08.2020 US 202016985504
(43) Date of publication of application: 27.10.2021
(73) Proprietor: B/E Aerospace, Inc., Winston Salem, NC 27105 (US)
(72) Inventor: DHANAPAL, Manikandan, 613602 Thanjavur, Tamilnadu (IN)
(74) Representative: Dehns

(56) References cited:
- EP-A2- 1 600 373
- US-A1- 2004 174 268
- US-A1- 2007 266 637
- US-A1- 2014 117 114
- US-A1- 2017 283 092

## Description

### CROSS-REFERENCE TO RELATED APPLICATIONS

This application claims priority to and the benefit of India Patent Application No. 202041017759 filed April 25, 2020 entitled "SYSTEM AND METHOD FOR CONTROLLING LID OF TRASH RECEPTACLE OF AIRCRAFT LAVATORY.

### FIELD

The present disclosure relates to systems and methods for controlling a lid of a trash receptacle, and in particular for controlling lids of trash receptacles in aircraft lavatories.

### BACKGROUND

Aircraft generally include one or more lavatories for passengers to use during flight. Aircraft lavatories generally include a toilet, a washbasin, and a trash receptacle, among other features. Conventional aircraft trash receptacles include a lid that is manually opened by a passenger to uncover the access opening for the trash receptacle, thereby allowing the passenger to deposit refuse, garbage, rubbish, or other waste products. However, because passengers must directly touch conventional lids to open/close to gain access to the trash receptacle, such lids are often non-hygienic and may become not sanitary. Further, some lids remain open even after the passenger has left the lavatory, thereby allowing odors from the trash receptacle to fill the lavatory. Additionally, lids for trash receptacles that remain open for extended periods of time may be a fire hazard. Trash receptacles are disclosed in EP 1600373, US 2014/117114 and US 2007/266637.

### SUMMARY

In various embodiments, the present disclosure provides a system for controlling a lid of a trash receptacle for use in an aircraft lavatory as defined by claim 1.

In various embodiments, the controller is configured to command the actuator to perform the closing actuation in response to a passenger exiting the aircraft lavatory.

The controller may be configured to command the actuator to perform the closing actuation in response to a door of the aircraft lavatory changing from locked to unlocked. In various embodiments, the controller is configured to command the actuator to maintain the lid in the closed position in response to a door to the aircraft lavatory being unlocked. The system may further include a door sensor of a door of the aircraft lavatory, wherein the door sensor is electrically coupled to the controller and the controller is configured to command the actuator to maintain the lid in the closed position in response to the door sensor reporting the door being unlocked.

In various embodiments, the controller is configured to command the actuator to perform the opening actuation in response to a passenger pressing a button electrically coupled to the controller. The system may further include a proximity sensor electrically coupled to the controller, wherein the controller is configured to command the actuator to perform the opening actuation in response to the proximity sensor reporting an object is proximate the lid. The proximity sensor may be an infrared sensor or a photoresistor sensor.

Also disclosed herein, according to various embodiments, is an article of manufacture as defined by claim 8.

In various embodiments, the operations further include receiving, by the processor, a door status of a door of the aircraft lavatory, wherein the closing is performed in response to the door status changing from locked to unlocked. In various embodiments, the operations further comprise maintaining, by the processor, the lid of the trash receptacle in a closed position in response to the door status being unlocked.

Also disclosed herein, according to various embodiments, is a method of controlling a lid of a trash receptacle for use in an aircraft lavatory as defined by claim 11.

In various embodiments, the method includes receiving, by the controller, a door status of a door of the aircraft lavatory, wherein the closing is performed in response to the door status changing from locked to unlocked. The method may also include maintaining, by the controller, the lid of the trash receptacle in a closed position in response to the door status being unlocked.

These features and elements as well as the operation of the disclosed embodiments will become more apparent in light of the following description and accompanying drawings.

### BRIEF DESCRIPTION OF THE DRAWINGS

FIG. 1 illustrates an aircraft having a lavatory, in accordance with various embodiments;
FIG. 2 illustrates a perspective view of an aircraft lavatory, in accordance with various embodiments;
FIG. 3A is a schematic block diagram of a system for controlling a lid of a trash receptacle of an aircraft lavatory, in accordance with various embodiments;
FIG. 3B is a schematic block diagram of a system for controlling a lid of a trash receptacle of an aircraft lavatory, in accordance with various embodiments;
FIG. 3C is a schematic block diagram of a system for controlling a lid of a trash receptacle of an aircraft lavatory, in accordance with various embodiments; and
FIG. 4 is a schematic flow chart diagram of a method of controlling a lid of a trash receptacle of an aircraft lavatory, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the scope of the invention as defined by the claims. Thus, the detailed description herein is presented for purposes of illustration only and not of limitation.

Disclosed herein, according to various embodiments, are systems, methods, and articles of manufacture for controlling a lid of a trash receptacle of an aircraft lavatory. Generally, the systems, methods, and articles of manufacture disclosed and described herein facilitate controlled opening and closing actuations of a lid of a trash receptacle of an aircraft lavatory. By controlling the opening and/or closing actuations of the lid, hygiene and sanitation of the lavatory are improved, odors are prevented from dispersing throughout the lavatory and/or cabin of the aircraft, and fire hazards are reduced, among other benefits and according to various embodiments. Although numerous details and examples are included herein pertaining to aircraft lavatories, the present disclosure is not necessarily so limited, and thus aspects of the disclosed embodiments may be adapted for performance in a variety of other industries (e.g., trains, vehicles, etc.). As such, numerous applications of the present disclosure may be realized.

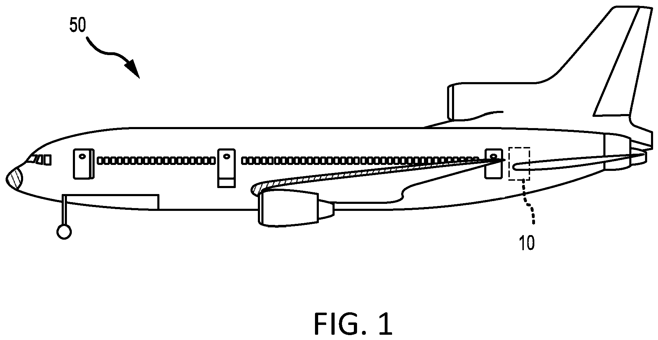

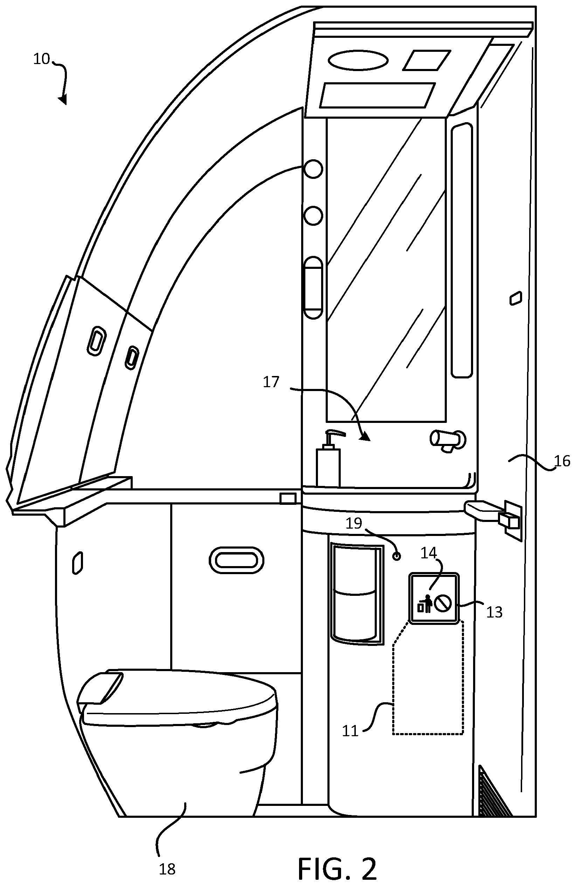

In various embodiments, and with reference to FIGS. 1 and 2, an aircraft 50 may include aircraft lavatory 10. The aircraft lavatory 10 may include a trash receptacle 11, a lid 14 for the trash receptacle 11, a door 16, a washbasin 17, and a toilet 18, among other features. The trash receptacle 11 may be defined by, or may be disposed in, a volume defined by a housing, paneling, or a wall section of the aircraft lavatory 10. The housing may also define an access opening 13 to the trash receptacle 11, and the lid 14 may be pivotably, hingedly, or otherwise moveably coupled to the housing adjacent the access opening 13, and thereby the lid 14 may selectively cover the access opening 13. For example, the lid 14 may be pivot away from the access opening 13 to allow access to the trash receptacle 11 and may pivot toward and engage the rim of the access opening 13 to close the lid 14 and seal off access to the trash receptacle 11.

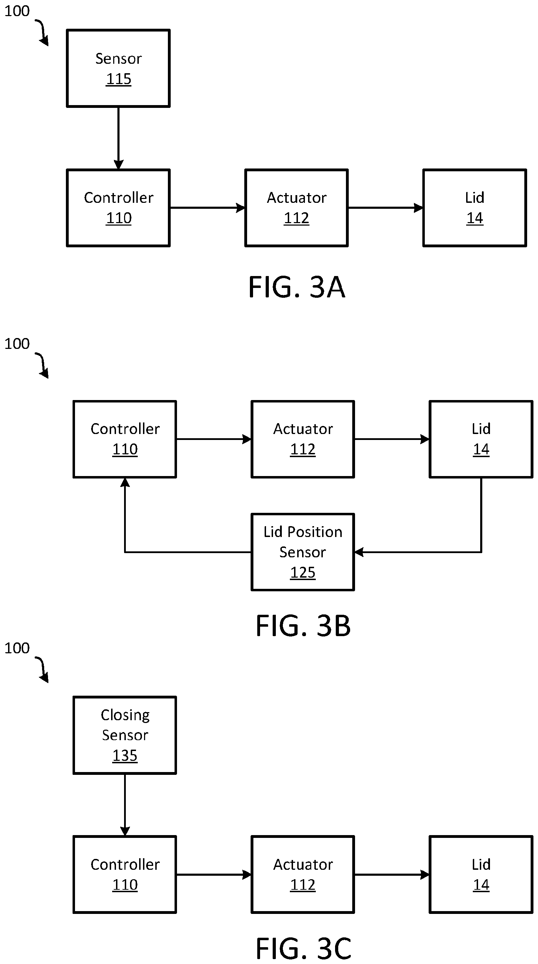

In various embodiments, and with reference to FIGS. 2 and 3A, a system 100 for controlling the lid 14 of the trash receptacle 11 for use in the aircraft lavatory 10 is provided. The system 100 may include the housing that defines the volume/space for the trash receptacle 11 and the access opening 13. In various embodiments, the system 100 also includes the lid 14 pivotably coupled to the housing adjacent the access opening 13. In various embodiments, the system 100 further includes an actuator 112 coupled to the lid 14, and a controller 110 electrically coupled to the actuator 112. Generally, the controller 110 may be configured to command the actuator 112 to perform an opening actuation to pivot the lid 14 to an open position (from a closed position) and/or to perform a closing actuation to pivot the lid to the closed position (from the open position).

The lid 14 may pivot about a top edge, a bottom edge, or a lateral side edge of the access opening. Additionally, the lid 14 may pivot inward or outward relative to the access opening 13. The actuator 112 may include one or more levers or straps connected to the lid 14, and the actuator 112 may include one or more rotational or linear mechanisms powered, for example, by a direct current power supply from the aircraft 50. Accordingly, the "actuator" 112 generally refers to devices, structures, and mechanisms that effectuate movement of the lid 14 in response to commands from the controller 110.

In various embodiments, the system 100 may include one or more sensors 115 to trigger the opening of the lid 14. That is, sensor 115 may be configured to receive or detect a condition, and this received/detected condition may be passed to the controller 110 to initiate the opening actuation via the actuator 112. In various embodiments, the sensor 115 may include a mechanism with which a passenger occupying the aircraft lavatory 10 may interact. For example, the sensor 115 may be a button 19 (FIG. 2) in the aircraft lavatory 10 that a passenger may press to cause the lid 14 to open. That is, the button 19 may be in electric communication with the controller 110, and upon receipt by the controller of a signal indicating a button-push, the controller 110 may control the actuator 112 to perform the opening actuation to open the lid 14. The controller 110 may be configured to keep the lid 14 open for a predetermined period of time after the button-push, or the controller 110 may be configured to close the lid 14 in response to a subsequent button-push. Thus, pressing the button 19 may toggle the opening/closing of the lid 14.

In various embodiments, the sensor 115 is a proximity sensor. The proximity sensor may be mounted adjacent the lid 14 and may be electrically coupled to the controller. The proximity sensor may detect and report when/if an object, such as a hand of a passenger, is proximate the lid 14, and this detected condition may be passed to the controller 110 to thereby command the actuator 112 to perform the opening actuation to open the lid 14. The proximity sensor may be an infrared sensor (e.g., a passive infrared sensor), a photoresistor sensor (e.g., a light decreasing resistor), an ultrasonic sensor, and/or a gesture sensor. The closing actuation may be performed in response to the proximity sensor no longer detecting an object proximate the lid 14. In various embodiments, the controller 110 may be configured to have a predetermined delay period, thus allowing the lid 14 to may remain open for a period of time after the object is removed from being proximate the lid 14.

In various embodiments, and with reference to FIG. 3B, the system 100 may further include a lid position sensor 125. The lid position sensor 125 may be electronically coupled in feedback providing communication with the controller 110 pertaining to the position of the lid 14. That is, the lid position sensor 125 may be operably coupled to the lid 14 and may be configured to detect a position of the lid 14 relative to the access opening 13, and thereby may report back to the controller 110 the position/status of the lid 14. In various embodiments, the lid position sensor 125 facilitates failure detection and corresponding correction.

In various embodiments, and with reference to FIG. 3C, the system 100 may further include one or more closing sensors 135. As used herein, the term "closing sensor(s)" refers to sensors that facilitate closure of the lid 14 without intentional action from the passenger. That is, as opposed to the button and/or proximity sensors described above with reference to FIG. 3A (sensor 115) which are triggered by deliberate and intentional action by the passenger/occupant to engage with the sensors 115, the closing sensors 135 are configured to detect conditions in/of the aircraft lavatory 10 that result in the lid 14 being automatically closed (via the controller 110 and the actuator 112) without deliberate/intentional action from the passenger.

In various embodiments, the closing sensors 135 include one or more occupancy sensors and/or one or more door sensors. That is, the closing sensor 135 may be an occupancy sensor configured to detect whether a passenger is in the aircraft lavatory and/or whether a passenger is leaving the aircraft lavatory. The closing sensor 135 may be a door sensor configured to detect a position/state of the door 16 (FIG. 2) of the aircraft lavatory 10 (e.g., whether the door is locked or unlocked). The closing sensor 135 may be electrically coupled to the controller 110 to provide the functionality described immediately below.

In various embodiments, closing sensor 135 may detect a passenger exiting the aircraft lavatory, and the controller 110 may be configured to command the actuator 112 to perform the closing actuation in response. In various embodiments, the controller 110 is configured to command the actuator 112 to maintain the lid 14 in the closed position in response to the aircraft lavatory being vacant (as detected by the closing sensor 135, which may an occupancy/door sensor). For example, the controller 110 may be configured to command the actuator 112 to maintain the lid 14 in the closed position in response to a lavatory occupancy sensor reporting vacancy of the aircraft lavatory.

In various embodiments, closing sensor 135 detects a condition of the door 16 to the aircraft lavatory 10. That is, the closing sensor 135 may detect the condition of the door 16 changing from locked to unlocked, and the controller 110 may thus command the actuator 112 to perform the closing actuation in response. In various embodiments, the controller 110 is configured to command the actuator 112 to maintain the lid 14 in the closed position in response to the door 16 to the aircraft lavatory 10 being unlocked. For example, the controller 110 may be configured to command the actuator 112 to maintain the lid 14 in the closed position in response to a door sensor reporting the door being unlocked.

In various embodiments, the features of FIGS. 3A, 3B, and 3C may be combinable with each other in various manners. That is, the system 100 may include one or more of the sensors 115 described above with reference to FIG. 3A (pertaining to opening/closing the lid via intentional action by the passenger). Additionally, the system 100 may include the lid position sensor of FIG. 3B, and/or the system 100 may include one or more of the closing sensors 135 described above with reference to FIG. 3C.

In various embodiments, the controller 110 may be integrated into computer systems onboard the aircraft, or the controller may be a standalone controller. In various embodiments, the controller 110 comprises a processor. In various embodiments, the controller 110 is implemented in a single processor. In various embodiments, the controller 110 may be implemented as and may include one or more processors and/or one or more tangible, non-transitory memories and be capable of implementing logic. Each processor can be a general purpose processor, a digital signal processor (DSP), an application specific integrated circuit (ASIC), a field programmable gate array (FPGA) or other programmable logic device, discrete gate or transistor logic, discrete hardware components, or any combination thereof. The controller 110 may comprise a processor configured to implement various logical operations in response to execution of instructions, for example, instructions stored on a non-transitory, tangible, computer-readable medium configured to communicate with the controller 110.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

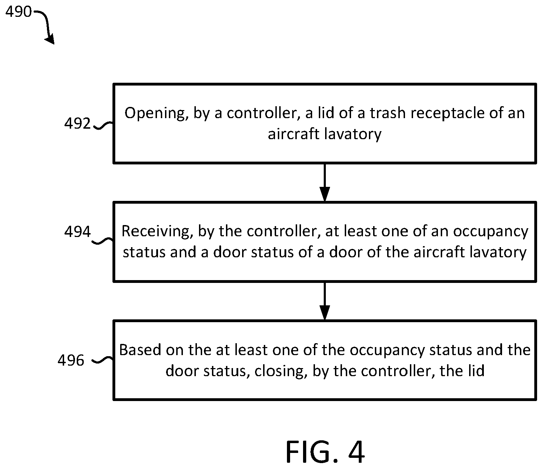

In various embodiments, the controller 110 may be, or may be incorporated into, an article of manufacture. Thus, the terms "controller" and "article of manufacture" may be used interchangeably herein. The article of manufacture may include a processor and a storage medium/memory, as described above. The processor of the article of manufacture may execute instructions to perform various operations. The various operations performed by the processor are as shown in FIG. 4, according to various embodiments. That is, FIG. 4 shows a schematic flow chart diagram of a method 490 of controlling a lid of a trash receptacle of an aircraft lavatory. The method 490, and thus the operations performed by the processor, may include, opening, by the processor, the lid 14 of the trash receptacle 11 of the aircraft lavatory 10 at step 492. The method 490 may further include closing, by the processor, the lid 14 of the trash receptacle 11 of the aircraft lavatory 10 at step 496. In various embodiments, the method 490 also includes receiving, by the controller, at least one of an occupancy status of the aircraft lavatory and a door status of a door of the aircraft lavatory at step 494. In various embodiments, step 496 is based on step 494, in that the occupancy status and/or the door status determines whether the lid 14 is closed.

In various embodiments, closing the lid 14 is performed in response to the occupancy status changing from occupied to vacant. That is, in response to the controller 110 receiving an input indicating that the occupancy status of the aircraft lavatory 10 has changed from occupied to vacant, the processor of the controller 110 may send commands to the actuator to close the lid 14 of the trash receptacle 11. In various embodiments, the operations further include maintaining, by the processor of the controller 110, the lid 14 of the trash receptacle 11 in the closed position in response to the occupancy status being, and/or remaining, vacant.

In various embodiments, closing the lid 14 is performed in response to a door status of a door of the aircraft lavatory 10 changing from locked to unlocked. That is, in response to the controller 110 receiving an input indicating that the door status has changed from locked to unlocked, the processor of the controller 110 may send commands to the actuator 112 to close the lid 14. In various embodiments, the operations further include maintaining, by the processor, the lid of the trash receptacle in a closed position in response to the door status being unlocked.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. reading the description, it will be apparent to one skilled in the relevant art(s) how to implement the disclosure in alternative embodiments.

## Claims

1. A system for controlling a lid of a trash receptacle for use in an aircraft lavatory, the system comprising:
a housing defining a volume for the trash receptacle (11), the housing defining an access opening (13) to the trash receptacle through which trash can be inserted;
the lid (14) pivotably coupled to the housing adjacent the access opening to the trash receptacle, wherein the lid is configured to be pivotable between at least an open position and a closed position relative to the access opening;
an actuator (112) coupled to the lid; and
a controller (110) electrically coupled to the actuator, wherein the controller is configured to command the actuator to perform an opening actuation to pivot the lid to the open position and a closing actuation to pivot the lid to the closed position; and **characterized by** further comprising a lavatory occupancy sensor (135) electrically coupled to the controller, wherein the controller is configured to command the actuator to maintain the lid in the closed position in response to the lavatory occupancy sensor reporting vacancy of the aircraft lavatory.

2. The system of claim 1, wherein the controller (110) is configured to command the actuator (112) to perform the closing actuation in response to a passenger exiting the aircraft lavatory.

3. The system of any preceding claim, wherein the controller (110) is configured to command the actuator (112) to perform the closing actuation in response to a door of the aircraft lavatory changing from locked to unlocked.

4. The system of any preceding claim, wherein the controller (110) is configured to command the actuator (112) to maintain the lid in the closed position in response to a door to the aircraft lavatory being unlocked, and/or wherein the controller is configured to command the actuator to perform the opening actuation in response to a passenger pressing a button electrically coupled to the controller.

5. The system of any preceding claim, further comprising a door sensor (115) of a door of the aircraft lavatory, wherein the door sensor is electrically coupled to the controller and the controller is configured to command the actuator to maintain the lid in the closed position in response to the door sensor reporting the door being unlocked.

6. The system of any preceding claim, further comprising a proximity sensor (115) electrically coupled to the controller, wherein the controller is configured to command the actuator to perform the opening actuation in response to the proximity sensor reporting an object is proximate the lid.

7. The system of claim 6, wherein the proximity sensor is at least one of an infrared sensor and a photoresistor sensor.

8. An article of manufacture comprising a processor and a tangible, non-transitory computer-readable storage medium having instructions stored thereon that, in response to execution by the processor, cause the processor to perform operations comprising:
closing, by the processor and via an actuator (112), a lid (14) of a trash receptacle (11) of an aircraft lavatory; and
maintaining, by the processor, the lid of the trash receptacle in a closed position in response to the occupancy status of the aicraft lavatory being vacant.

9. The article of manufacture of claim 8, wherein the operations further comprise receiving, by the processor, the occupancy status of the aircraft lavatory, wherein the closing is performed in response to the occupancy status changing from occupied to vacant; and/or wherein the operations further comprise receiving, by the processor, a door status of a door of the aircraft lavatory, wherein the closing is performed in response to the door status changing from locked to unlocked.

10. The article of manufacture of claim 9, wherein the operations further comprise maintaining, by the processor, the lid of the trash receptacle in the closed position in response to the door status being unlocked.

11. A method of controlling a lid (14) of a trash receptacle (11) for use in an aircraft lavatory, the method comprising:
receiving, by a controller (110), an occupancy status of the aircraft lavatory;
closing, by the controller (110) and via an actuator (112), the lid of the trash receptacle of the aircraft lavatory in response to the occupancy status changing from occupied to vacant; and
maintaining, by the controller, the lid of the trash receptacle in a closed position in response to the occupancy status being vacant.

12. The method of claim 11, further comprising receiving, by the controller, a door status of a door of the aircraft lavatory, wherein the closing is performed in response to the door status changing from locked to unlocked.

13. The method of claim 12, further comprising maintaining, by the controller, the lid of the trash receptacle in the closed position in response to the door status being unlocked.

## Patentansprüche

1. System zum Steuern eines Deckels eines Müllbehälters zur Verwendung in einem Flugzeugwaschraum, wobei das System Folgendes umfasst:
ein Gehäuse, das ein Volumen für den Müllbehälter (11) definiert, wobei das Gehäuse eine Zugangsöffnung (13) zu dem Müllbehälter definiert, durch die Müll eingebracht werden kann;
wobei der Deckel (14) schwenkbar mit dem Gehäuse benachbart zu der Zugangsöffnung zu dem Müllbehälter gekoppelt ist, wobei der Deckel dazu konfiguriert ist, relativ zu der Zugangsöffnung zwischen mindestens einer offenen Position und einer geschlossenen Position schwenkbar zu sein;
einen Aktuator (112), der mit dem Deckel gekoppelt ist; und eine Steuerung (110), die elektrisch mit dem Aktuator gekoppelt ist, wobei die Steuerung dazu konfiguriert ist, dem Aktuator zu befehlen, eine Öffnungsbetätigung, um den Deckel in die offene Position zu schwenken, und eine Schließbetätigung, um den Deckel in die geschlossene Position zu schwenken, durchzuführen; und
**dadurch gekennzeichnet, dass** es ferner einen Waschraumbelegungssensor (135) umfasst, der elektrisch mit der Steuerung gekoppelt ist, wobei die Steuerung dazu konfiguriert ist, als Reaktion darauf, dass der Waschraumbelegungssensor meldet, dass der Flugzeugwaschraum frei ist, dem Aktuator zu befehlen, den Deckel in der geschlossenen Position zu halten.

2. System nach Anspruch 1, wobei die Steuerung (110) dazu konfiguriert ist, dem Aktuator (112) als Reaktion darauf, dass ein Passagier den Flugzeugwaschraum verlässt, zu befehlen, die Schließbetätigung durchzuführen.

3. System nach einem der vorhergehenden Ansprüche, wobei die Steuerung (110) dazu konfiguriert ist, dem Aktuator (112) als Reaktion darauf, dass sich eine Tür des Flugzeugwaschraums von verriegelt in entriegelt ändert, zu befehlen, die Schließbetätigung durchzuführen.

4. System nach einem der vorhergehenden Ansprüche, wobei die Steuerung (110) dazu konfiguriert ist, dem Aktuator (112) als Reaktion auf ein Entriegeln einer Tür zu dem Flugzeugwaschraum zu befehlen, den Deckel in der geschlossenen Position zu halten, und/oder wobei die Steuerung dazu konfiguriert ist, dem Aktuator als Reaktion darauf, dass ein Passagier einen elektrisch mit der Steuerung gekoppelten Knopf drückt, zu befehlen, die Öffnungsbetätigung durchzuführen.

5. System nach einem der vorhergehenden Ansprüche, ferner einen Türsensor (115) einer Tür des Flugzeugwaschraums umfassend, wobei der Türsensor elektrisch mit der Steuerung gekoppelt ist und die Steuerung dazu konfiguriert ist, dem Aktuator als Reaktion darauf, dass der Türsensor meldet, dass die Tür entriegelt wurde, zu befehlen, den Deckel in der geschlossenen Position zu halten.

6. System nach einem der vorhergehenden Ansprüche, ferner einen Näherungssensor (115) umfassend, der elektrisch mit der Steuerung gekoppelt ist, wobei die Steuerung dazu konfiguriert ist, dem Aktuator als Reaktion darauf, dass der Näherungssensor meldet, dass sich ein Objekt in der Nähe des Deckels befindet, zu befehlen, die Öffnungsbetätigung durchzuführen.

7. System nach Anspruch 6, wobei der Näherungssensor mindestens eines von einem Infrarotsensor oder einem Photowiderstandssensor ist.

8. Herstellungsgegenstand, umfassend einen Prozessor und ein physisches, nicht flüchtiges, computerlesbares Speichermedium, das darauf gespeicherte Anweisungen aufweist, die als Reaktion auf eine Ausführung durch den Prozessor den Prozessor veranlassen, Vorgänge durchzuführen, die Folgendes umfassen:
Schließen, durch den Prozessor und über einen Aktuator (112), eines Deckels (14) eines Müllbehälters (11) eines Flugzeugwaschraums; und
Halten des Deckels des Müllbehälters in einer geschlossenen Position durch den Prozessor als Reaktion darauf, dass der Belegungsstatus des Flugzeugwaschraums frei ist.

9. Herstellungsgegenstand nach Anspruch 8, wobei die Vorgänge ferner Empfangen des Belegungsstatus des Flugzeugwaschraums durch den Prozessor umfassen, wobei das Schließen als Reaktion darauf durchgeführt wird, dass sich der Belegungsstatus von belegt in frei ändert; und/oder wobei die Vorgänge ferner Empfangen eines Türstatus einer Tür des Flugzeugwaschraums durch den Prozessor umfassen, wobei das Schließen als Reaktion darauf durchgeführt wird, dass sich der Türstatus von verriegelt in entriegelt ändert.

10. Herstellungsgegenstand nach Anspruch 9, wobei die Vorgänge ferner Halten des Deckels des Müllbehälters in der geschlossenen Position durch den Prozessor, als Reaktion darauf, dass der Türstatus entriegelt ist, umfassen.

11. Verfahren zum Steuern eines Deckels (14) eines Müllbehälters (11) zur Verwendung in einem Flugzeugwaschraum, wobei das Verfahren Folgendes umfasst:
Empfangen eines Belegungsstatus des Flugzeugwaschraums durch eine Steuerung (110);
Schließen, durch die Steuerung (110) und über einen Aktuator (112), des Deckels des Müllbehälters des Flugzeugwaschraums als Reaktion darauf, dass sich der Belegungsstatus von belegt in frei ändert; und
Halten des Deckels des Müllbehälters durch die Steuerung in einer geschlossenen Position als Reaktion darauf, dass der Belegungsstatus frei ist.

12. Verfahren nach Anspruch 11, ferner Empfangen eines Türstatus einer Tür des Flugzeugwaschraums durch die Steuerung umfassend, wobei das Schließen als Reaktion darauf durchgeführt wird, dass sich der Türstatus von verriegelt in entriegelt ändert.

13. Verfahren nach Anspruch 12, ferner umfassend Halten des Deckels des Müllbehälters in der geschlossenen Position durch die Steuerung als Reaktion darauf, dass der Türstatus entriegelt ist.

## Revendications

1. Système de commande d'un couvercle d'une poubelle destiné à être utilisée dans des toilettes d'aéronef, le système comprenant :
un logement définissant un volume pour la poubelle (11), le logement définissant une ouverture d'accès (13) à la poubelle à travers laquelle des ordures peuvent être insérées ;
le couvercle (14) étant couplé de manière pivotante au logement adjacent à l'ouverture d'accès à la poubelle, dans lequel le couvercle est configuré pour pouvoir pivoter entre au moins une position ouverte et une position fermée par rapport à l'ouverture d'accès ;
un actionneur (112) couplé au couvercle ; et
un dispositif de commande (110) couplé électriquement à l'actionneur, dans lequel le dispositif de commande est configuré pour ordonner à l'actionneur d'effectuer un actionnement d'ouverture pour faire pivoter le couvercle vers la position ouverte et un actionnement de fermeture pour faire pivoter le couvercle vers la position fermée ; et **caractérisé en ce qu'**il comprend en outre un capteur d'occupation des toilettes (135) couplé électriquement au dispositif de commande, dans lequel le dispositif de commande est configuré pour ordonner à l'actionneur de maintenir le couvercle dans la position fermée en réponse au capteur d'occupation des toilettes signalant l'inoccupation des toilettes de l'aéronef.

2. Système selon la revendication 1, dans lequel le dispositif de commande (110) est configuré pour ordonner à l'actionneur (112) d'effectuer l'actionnement de fermeture en réponse à un passager sortant des toilettes de l'aéronef.

3. Système selon une quelconque revendication précédente, dans lequel le dispositif de commande (110) est configuré pour ordonner à l'actionneur (112) d'effectuer l'actionnement de fermeture en réponse à une porte des toilettes de l'aéronef passant de verrouillée à déverrouillée.

4. Système selon une quelconque revendication précédente, dans lequel le dispositif de commande (110) est configuré pour ordonner à l'actionneur (112) de maintenir le couvercle dans la position fermée en réponse au déverrouillage d'une porte des toilettes de l'aéronef, et/ou dans lequel le dispositif de commande est configuré pour ordonner à l'actionneur d'effectuer l'actionnement d'ouverture en réponse à un passager appuyant sur un bouton couplé électriquement au dispositif de commande.

5. Système selon une quelconque revendication précédente, comprenant en outre un capteur de porte (115) d'une porte des toilettes de l'aéronef, dans lequel le capteur de porte est couplé électriquement au dispositif de commande et le dispositif de commande est configuré pour ordonner à l'actionneur de maintenir le couvercle dans la position fermée en réponse au capteur de porte signalant que la porte est déverrouillée.

6. Système selon une quelconque revendication précédente, comprenant en outre un capteur de proximité (115) couplé électriquement au dispositif de commande, dans lequel le dispositif de commande est configuré pour ordonner à l'actionneur d'effectuer l'actionnement d'ouverture en réponse au capteur de proximité signalant qu'un objet est à proximité du couvercle.

7. Système selon la revendication 6, dans lequel le capteur de proximité est au moins l'un d'un capteur infrarouge et d'un capteur à photorésistance.

8. Article manufacturé comportant un processeur et un support de stockage tangible non transitoire lisible par ordinateur ayant des instructions stockées sur celui-ci qui, en réponse à l'exécution par le processeur, amènent le processeur à effectuer des opérations comprenant :
la fermeture, par le processeur et via un actionneur (112), d'un couvercle (14) d'une poubelle (11) de toilettes d'aéronef ; et
le maintien, par le processeur, du couvercle de la poubelle dans une position fermée en réponse au fait que l'état d'occupation des toilettes de l'aéronef est vacant.

9. Article manufacturé selon la revendication 8, dans lequel les opérations comprennent en outre la réception, par le processeur, du statut d'occupation des toilettes de l'aéronef, dans lequel la fermeture est effectuée en réponse au statut d'occupation passant d'occupé à vacant ; et/ou dans lequel les opérations comprennent en outre la réception, par le processeur, d'un état de porte d'une porte des toilettes de l'aéronef, dans lequel la fermeture est effectuée en réponse au changement de l'état de porte de verrouillé à déverrouillé.

10. Article manufacturé selon la revendication 9, dans lequel les opérations comprennent en outre le maintien, par le processeur, du couvercle de la poubelle dans la position fermée en réponse à l'état de porte étant déverrouillé.

11. Procédé de commande d'un couvercle (14) d'une poubelle (11) destiné à être utilisée dans des toilettes d'aéronef, le procédé comprenant :
la réception, par un dispositif de commande (110), d'un état d'occupation des toilettes de l'aéronef ;
la fermeture, par le dispositif de commande (110) et via un actionneur (112), du couvercle de la poubelle des toilettes de l'aéronef en réponse au changement d'état d'occupation d'occupé à vacant ; et
le maintien, par le dispositif de commande, du couvercle de la poubelle dans une position fermée en réponse au fait que l'état d'occupation est vacant.

12. Procédé selon la revendication 11, comprenant en outre la réception, par le dispositif de commande, d'un état de porte d'une porte des toilettes de l'aéronef, dans lequel la fermeture est effectuée en réponse au changement de l'état de porte de verrouillé à déverrouillé.

13. Procédé selon la revendication 12, comprenant en outre le maintien, par le dispositif de commande, du couvercle de la poubelle dans la position fermée en réponse à l'état de porte étant déverrouillé.
